Europäisches Patentamt

European Patent Office

Office européen des brevets

(11) Publication number: **0 213 277**
**A2**

# (12) EUROPEAN PATENT APPLICATION

(21) Application number: **86106717.1**

(22) Date of filing: **16.05.86**

(51) Int. Cl.⁴: **G06F 15/40**

(30) Priority: **11.06.85 US 743467**

(43) Date of publication of application:
**11.03.87 Bulletin 87/11**

(84) Designated Contracting States:
**DE FR GB IT**

(71) Applicant: **International Business Machines
Corporation
Old Orchard Road
Armonk, N.Y. 10504(US)**

(72) Inventor: **Bartocci, Francis Dennis
2434 Northern Hill Ct.
Rochester Minnesota 55904(US)**
Inventor: **Won, Joha Hyun
24, Sedgewood Road
Chapel Hill North Carolina 27514(US)**
Inventor: **Singh, Harinder S.
10722 Kirkaldy Lane
Boca Raton Florida 33434(US)**
Inventor: **Gopal, Inder
60, Hauen Ave. NR 19E
New York, N.Y. 10032(US)**

(74) Representative: **Bonin, Jean-Jacques
Compagnie IBM France Département de
Propriété Intellectuelle
F-06610 La Gaude(FR)**

(54) Propagation system for user queries through a distributed data base.

(57) A directory dabatase system includes a network and a plurality of directory service units (DSU), each of the DSUs providing one or more directory service functions within the directory database. For propagation of an undirected user query relative to an object in the database from a source DSU to one or more target DSUs, one of which may contain information relative to the object, a propagation (P) table is provided in each of the DSUs, the P tables being a data structure capable of determining which other DSUs to send the user query to.

The source DSU examines its associated P table for the directory type specified in the query to generate an identification of one or more additional target ones of the DSUs to which the query should be directed. After propagating a query from the source DSU to those additional DSUs identified by the P table in the source DSU, there is returned to the source DSU information responsive to the user query from the one of the additional target DSUs containing the information.

API

FIND_ELEMENT
(DIR. TYPE ID-
SPECIAL, INFO
WANTED - TAR-
GET DSU, ...)

SOURCE
DSU A

TRANSPORT
MECHANISM

TARGET
DSU B

RSP (TARGET-
DSU B)

SPECIAL
DIRECTORY

| NAME | DSU |
|------|-----|
| ⋮ | ⋮ |

FIND_ELEMENT
(TARGET - DSU B,...)

QUERY(. . .)

RPLY (. . .)

RSP (. . .)

QUERY TO SPECIAL DIRECTORY FOLLOWED BY DIRECTED QUERY

# FIG. 17

# PROPAGATION APPARATUS FOR NETWORK QUERIES THROUGH SUPERIOR-SUBORDINATE AND PEER-PEER DATA DISTRIBUTION RELATIONSHIPS

## CROSS-REFERENCE TO RELATED APPLICATIONS

The following copending applications, all filed by the same assignee as the present application, are related to the subject matter of this application, in that they each relate to different aspects of a directory database system.

(A1) "Generalized Data Directory Model", Application N° ........

(A2) "Generalized Algorithmic Control Blocks for Sequential and Parallel Queries in Distributed Directory Networks", Application N° ........

(A3) "Dynamic Update of Database Directories Using Directed or Undirected Mechanisms", Application N° ........

(A4) "Hybrid Directory Data Distribution Schemes for Network Topologies", Application N° ........

All of these applications (filed concurrently with the present application) are incorporated herein by reference.

## BACKGROUND OF THE INVENTION

### Field of the invention

This invention relates to systems for propagation user queries through a database network; the system being independent of the network topology. In the present application the term "directory" means a table of names and corresponding items of data. Data in a directory is locational or directive in nature, e.g.

(1) a listing of names, addresses, and other data about a specific group of persons or organisations, or

(2) an index that is used by a control program to locate one or more blocks of data stored in separate areas of a data set in direct access storage, or

(3) an index to locate blocks of program information. The user of a directory knows the definition of the object references by a name, but needs the specific data value(s), e.g. phone number, in order to perform a specific activity.

### Description of the Prior Art

Distributed database management systems offer users the ability to distribute data and workload among multiple processing sites. Ideally, a distributed database management system should support growth while preserving local administrative autonomy and control of access to locally stored data. At the same time, the distributed database should provide its users with a single system image such that, although the data is distributed among several sites, the data distribution is transparent to the users who express their database accesses as though the data is at one place.

It is important to preserve the local autonomy of database administrators and users at each site of the distributed database while, at the same time, supporting information sharing among sites. It is to be expected that the equipment supporting the database at different sites will be controlled by different administrative entities. This expectation increases as the entry costs for computing facilities decline. Increased distribution of computing facilities leads to additional requirements for information sharing between sites to support the shared objectives and interests of the users at different sites. Therefore, credible access control mechanisms must be provided to insure isolation, when desired, and to control access to the shared information. At the same time, users must be able to easily access and manipulate remote data as though it were local.

The distributed database management system architecture should preserve local control and function when accessing local database objects. The fact that a site participates in the distributed database should not reduce that site's ability to perform local actions on local data by requiring the participation of other sites. Also, data access availability should be a function only of the availability of the site(s) storing that data objects. The failure of one site should not impact sites which do not reference database objects stored (or controlled) by the failed site.

Finally, it must not be difficult for an existing database site to join the distributed database. It should be fairly easy for an existing database site to establish the ability to access data at another site. The addition of another site to the distributed database must not require a nationwide (or global) system generation.

U.S. Patent 4,468,728 discloses data structure and a search method for a database management system in which the data structure is arranged in a plurality of search trees. The initial search tree and an initial subset of trees are maintained in a main fast access memory, while the remaining trees are kept in mass memory. An input search parameter is partitioned into a plurality of subparameters, one for each search tree. The subparameters are used to search a tree in each level of the data structure until the location of a terminating file is determined.

An article entitled "Object Naming and Catalog Management For a Distributed Database Manager", Lindsay, 1981 IEEE, page 31, describes a system in which distribution of the catalog representation and maintenance leads to an architecture which supports transparent user access to data which may be distributed, replicated, and partitioned among the site of the distributed system. The architecture preserves individual site autonomy while facilitating graceful system growth.

SUMMARY OF THE INVENTION

The requirements placed upon the query mechanism provide the rationale for the mechanisms themselves. The requirements are as follows:

1. Full Accessibility: This is the basic requirement. It states that if a piece of information is stored in the directory services system, a user at any DSU in the system should be able to gain access to that information. This should be possible even if the user does not know precisely where that information is stored, or the way in which data is distributed through DSS. The requirement is subject to several exceptions such as security or access control restrictions. However, in general, the design of the query mechanisms is be primarily driven by this requirement.

2.Subset-Ability: This requirement states that all DSUs participating in a DSS need not implement the full function of the query mechanism in order for the first requirement to be satisfied. For example, small work stations in a DSS may not wish to act as an intermediate node in query propagation, but the users of the DSS may still require full accessibility. Implied in this requirement is the necessity for compatibility between different subsets operating within the same DSS.

3.Performance: Performance can be measured in many different ways. The major performance criteria are:

a. Bandwidth: It is clearly desirable to minimize the number of messages sent through the network by the query mechanisms, thereby freeing network bandwidth for other purposes.

b. Storage: Minimizing storage is particularly important in environments which consist of small minicomputers and/or work stations.

c. Delay: This refers in particular to query response times.

The algorithms employed in the present invention are designed, as far as possible, to minimize the above criteria.

BRIEF DESCRIPTION OF THE DRAWINGS

Fig.1 is a block diagram illustrating processes using a directory service system;

Fig. 2 is a block diagram illustrating interconnected DSUs in a DSS;

Fig. 3 illustrates the processing functions distributed in a DSS;

Fig. 4 illustrates a two-level hybrid directory system;

Fig. 5 shows the structure of the end user service P(U);

Fig. 6 is a block diagram illustrating the structure of the directory function service P(F);

Fig. 7 is a block diagram showing the structure of the directory data service P(D);

Fig. 8 illustrates the structure of the network service process P(N);

Fig. 9 shows the distribution of directory service processes in a DSS;

Fig. 10 illustrates DSI request flows among DSPs;

Fig. 11 illustrates the reply flows among DSPs;

Fig. 12 is a block diagram of the overall structure of the system of the present invention;

Figs. 13 and 14 illustrate the processing sequences for update and query propagation, respectively, in accordance with the present invention;

Fig. 15 is a representation of a typical directory operation control block;

Fig. 16 shows the flow of a directed query in accordance with the present invention;

Fig. 17 illustrates the flow where a special directory is queried to obtain a target DSU identification for a directed query;

Fig. 18 shows the propagation of an undirected query;

Fig. 19 illustrates an example of undesired looping between two DSUs during a query;

Fig. 20 shows a representative query P-table (QP) and au update P-table (UP);

Fig. 21 is a pictorial representation of a Superior-Subordinate (SUP-SUB) -relationship between DSUs;

Fig. 22 illustrates the flow for P-table translation for the SUP-SUB relationship shown in Fig. 21;

Fig. 23 is a representation of DSUs having a Peer-Peer relationship to each other;

Fig. 24 shows the P-table translation for the DSUs of Fig. 23;

Fig. 25 is a representation of DSUs having a Replicated relationship to each other;

Fig. 26 shows the P-table translation for the DSUs of Fig. 25;

Figs. 27-30 illustrate a number of other relationships among other DSUs;

Fig. 31 shows a UP-table illustrating parallel propagation to a number of SUP DSUs;

Fig. 32 shows a QP-table for the parallel propagation to SUP and PEER DSUs;

Fig. 33 shows a QP-table for the parallel propagation between SUP and PEER DSUs;

Fig. 34 illustrates a typical query message propagated in accordance with the present invention; and

Fig. 35 shows a typical response to a query.

## DESCRIPTION OF THE PREFERRED EMBODIMENT

In the description and drawings, the following terms are used with the indicated meanings.

Application Interface (API) -The protocol boundary between the user and the directory service.

Directory Service Interface (DSI) -The internal interface between directory service units and outside services, such as communication, user services, or user data areas.

Directory Service System (DSS) -An instance of directory service in a given network of distributed directory services.

Directory Service Unit (DSU)-Au unit of DSS that provides one or more directory service functions.

Prior to a detailed description of the present invention, the following overview of the environment and elements of the invention are given.

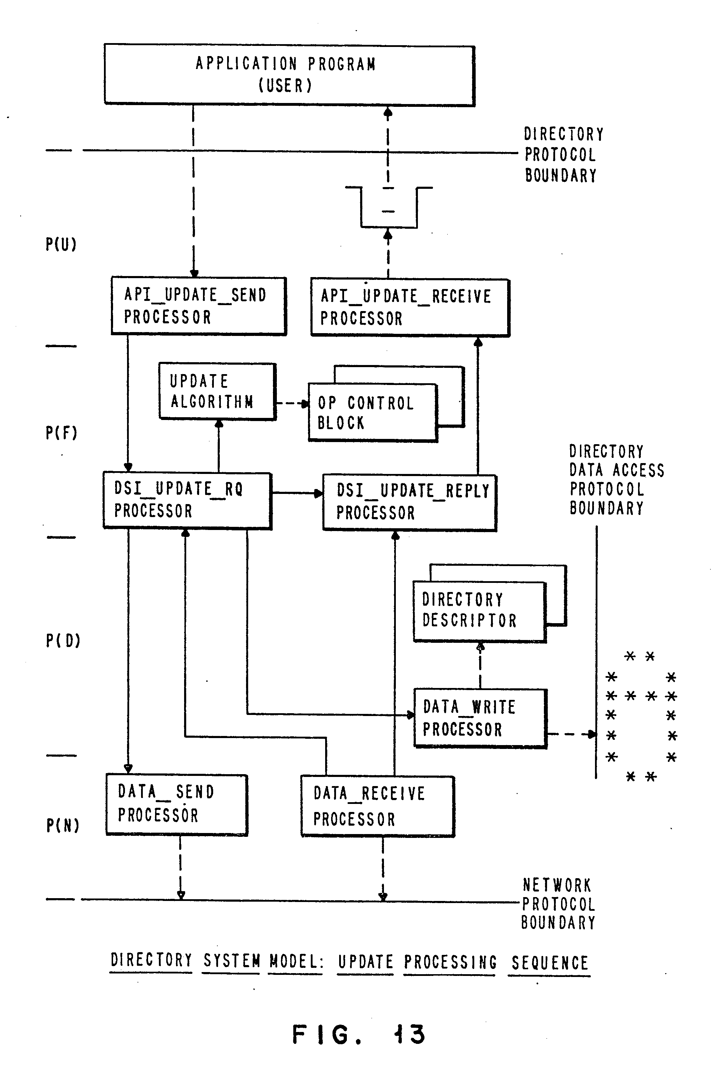

The basic structure of the directory database system of the present invention in shown in Fig. 12. Fig. 12 illustrates the different interfaces or protocol boundaries between the DSU shown in the dotted enclosure and other portions ot the system. Theses boundaries include a user protocol boundary shown at the top of the figure, a data access protocol boundary at the right side of the figure representing the interface between the DSU and the database, and a communications protocol boundary illustrated at the bottom of the figure.

The present structure and method is based on a distribution scheme where an instance of directory service may include on or more DSUs. Each DSU may perform one or more directory functions depending upon the product implementation.

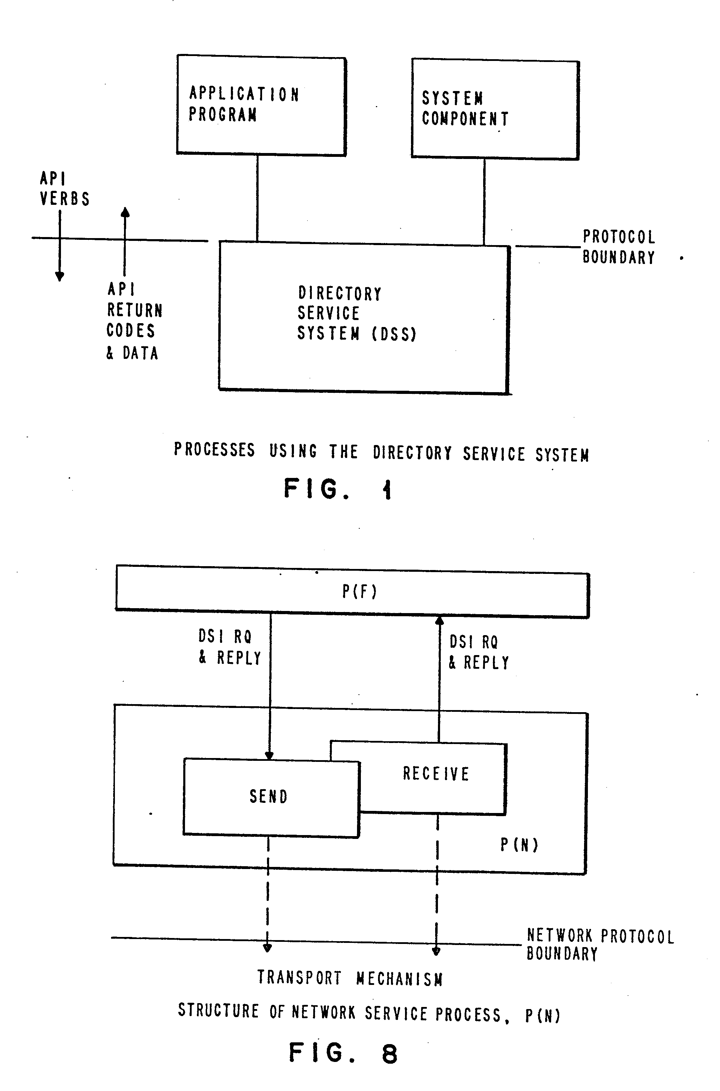

The directory service system (DSS) shown in Figure 1 is an installation of directory functions in a network of interconnected system. DSS provides the architectural directory services for the user at the API protocol boundary. The participating systems (products) in a DSS operate coherently under the architected rules such as data distribution - schemes, naming schemes, search/update algorithms, error recovery, synchronization and the like.

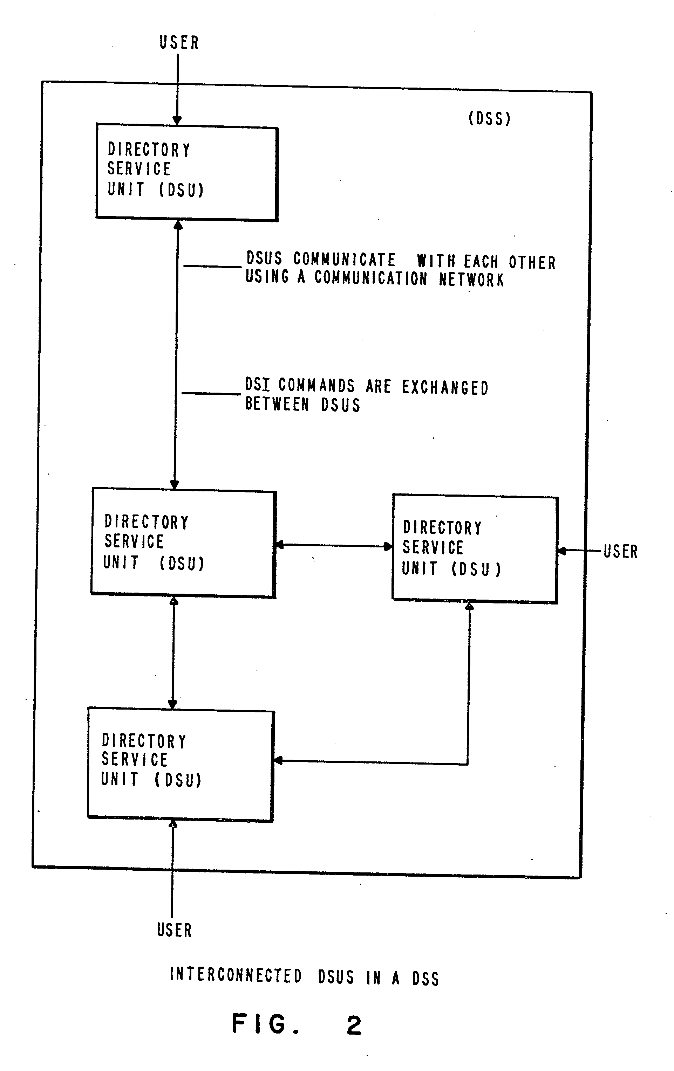

A DSS is comprised of a collection of directory service units distributed troughout the interconnected system network as shown in Figure 2. A DSU represents the directory service component of a system product implementing directory service functions. Although multiple DSUs may exist in the same system (product) for different applications, it is the intent that a single DSU can support many applications programs to eliminate duplication.

DSU Functions

A DSU is composed of a set of functional components called directory service processes - (DSP) to provide the subsetting basis for implementation by products. There are the following four types of DSPs, each of which performs distinct functions.

1. User Service Process, denoted as P(U) or U, manages the interface (protocol boundary) with users.

2. Directory Function Process, denoted as P-(F) or F, processes the directory functions to service the directory request using the algorithms (query/update/naming).

3. Directory Data Service, denoted as P(D) or D, manages the access and maintenance of the directory data.

4. Network Service Process, denoted as P-(N) or N, manages the transport network facilities to communicate with other DSUs.

In order to obtain full directory service, it is not necessary that every DSU in the system implement all DSPs. For example, a work-station may implement only some of the functions and obtain full directory service through interaction with a larger system product. Thus, a DSU may contain all four DSPs or some of the DSPs as necessary to meet the functional needs of each product.

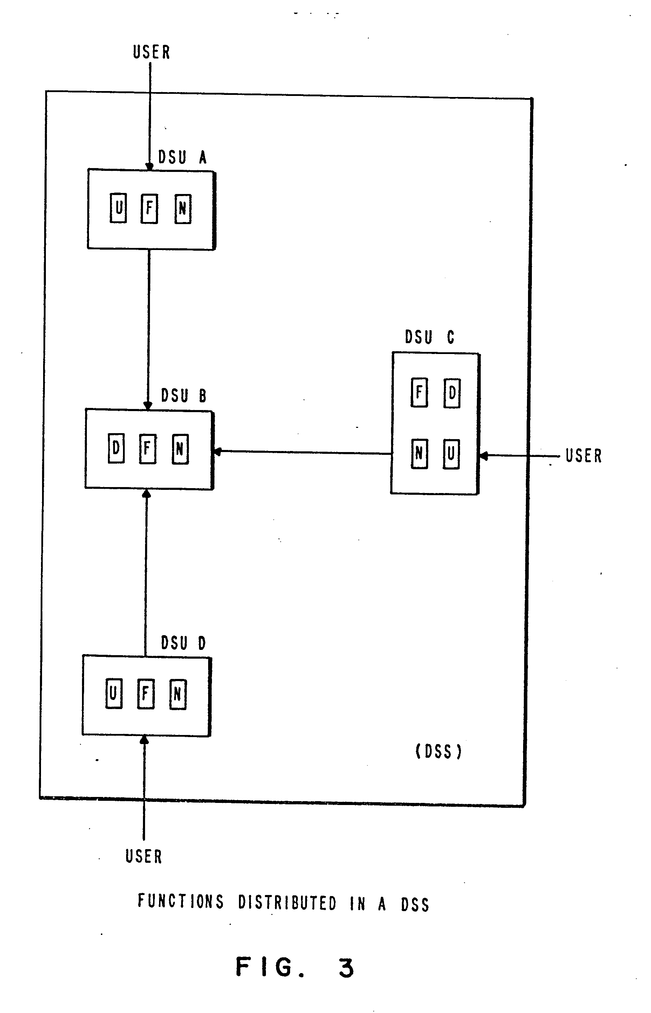

Figure 3 shows an example of implementation options by products in a simple network. DSU A and DSU D represent the work-station which performs the query on an as needed basis and discards the results of the query without retaining it in the storage. This type of product may not have to implement P(D). DSU C represents another type of work-station which retains the results of a query in its local directory. This type of product needs to implement P(D). DSU B represents the file server which acts merely as a data repository to maintain the master directory for the network. This type of product may not have to implement P(U).

DSU Roles

In order to perform a directory service in a distributed network environment, several DSUs are generally involved and each DSU plays different roles. The origin or source DSU receives a directory request from the user and originates the DSI request. The request is propagated through the intermediate DSUs as necessary to reach the target DSU which can service the request.

Directory Data Base

A directory is a database that stores mappings from name to information related to name. The directory data base is a set of directories which contain information of a similar type. There is more than one member in the set if the directory data base is distributed across participating DSUs. The directory data base and all members which comprise it are named via a directory type ID (Directory Identifier). For example, a directory database with directory type_ID TELEPHONE may contain name to telephone number mappings. A single DSU may maintain directories of different directory type_ID's, but for any given type_ID, a DSU may contain at most one directory.

Directory Distribution

Some examples of directory distribution - schemes are as follows:

Centralized Directory System

In this centralize directory system, there is a single master directory per directory type-ID located at one of the DSUs. The master directory will be updated whenever a change takes place. Directory updating in such a system is relatively easy. However, there are communication costs (traffic) incurred for each query, information at each DSU, as well as the communication cost for updating all these directories.

Hybrid Directory System

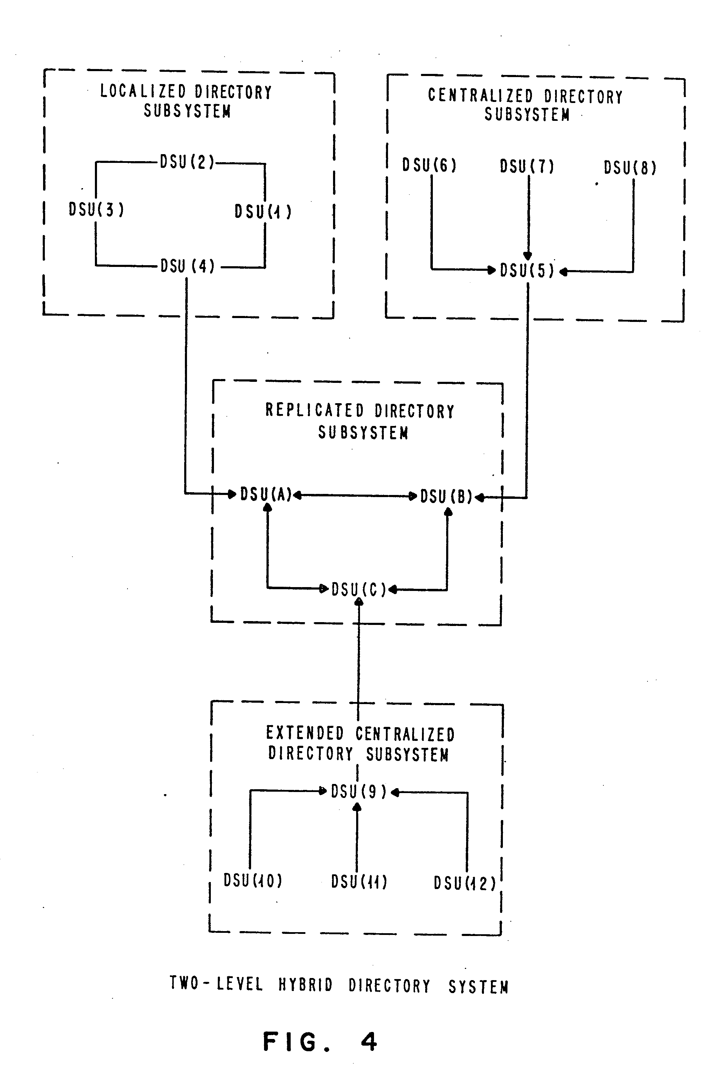

For networks up to a few tens of DSUs, a single level (primitive) distribution scheme described above (that is, centralized, localized and distributed), is usually sufficient. Beyond this number of nodes, hybrid systems combining various primitive distribution schemes in a hierarchical manner, as illustrated in Figure 4, may be attractive. The hybrid multiple level design can offer both types of performance improvements over a single level design.

The hybrid directory system is logically divided in subsystems, or regions, made up of any number of distributed directory services. Each subsystem uses different (primitive) directory distribution - schemes to fit into its regional environment. The hierarchical relationships between subsystems are independent of the actual topology of the physical network.

DSU-DSU Relationship

A directory service can define the functional relationship among the DSUs distributed in the network due to the following aspects:

The relationship provides a method of organizing the DSUs distributed in the network to allow the definition of simple and efficient protocols for the propagation of DSI commands such as query/update. In particular, the relationship can be used to constrain the set of DSUs to which a particular DSU can send a DSI command for query/update. The relationship is used to control how to distribute the directories, per directory type, among DSUs and how to maintain the respective directory. In some of the directory applications, the relationship of a particular set of DSUs might reflect the organisation structure of the entreprise owning the network, even though the network topology does not.

DSU-DSU Communication

The lines joining the DSUs in Figure 2 indicate the communication paths. Communication between DSUs may be accomplished through the use of any one of several different transport mechanisms. For example, DSUs may communicate with each other by running as a set of transaction models using IBM's System Network Architecture (SNA) or equivalent level of transport facilities. In this case, the lines represent sessions and may not resemble in any way the physical topology of the network. The only assumption that the directroy service structure makes about the nature of the transport mechanism is that it provides guaranteed error-free delivery of data from source to destination.

## User DSU Interface

The user makes a directory function request by way of the API verbs to one of the DSUs. The requested DSU interacts with other remote DSUs, and then provides the appropriate response to the user.

## DIRECTORY SERVICE PROCESS (DSP)

This section describes the functions and structure of each DSP. In practice, the DSPs may be implemented either in programming or by a microprocessor.

## End User Service Process P(U)

The P(U) basically manages the protocol boundary to service the end user request. Only P-(U) interfaces with the API, thus shielding other DSPs from the end user. At the request of the end user, P(U) parses the received verbs and sends the directory request to P(F) for the information/response ponse. When it receives the information/response from P(F), it returns it to user to satisfy the original API verb.

## Structure of P(U)

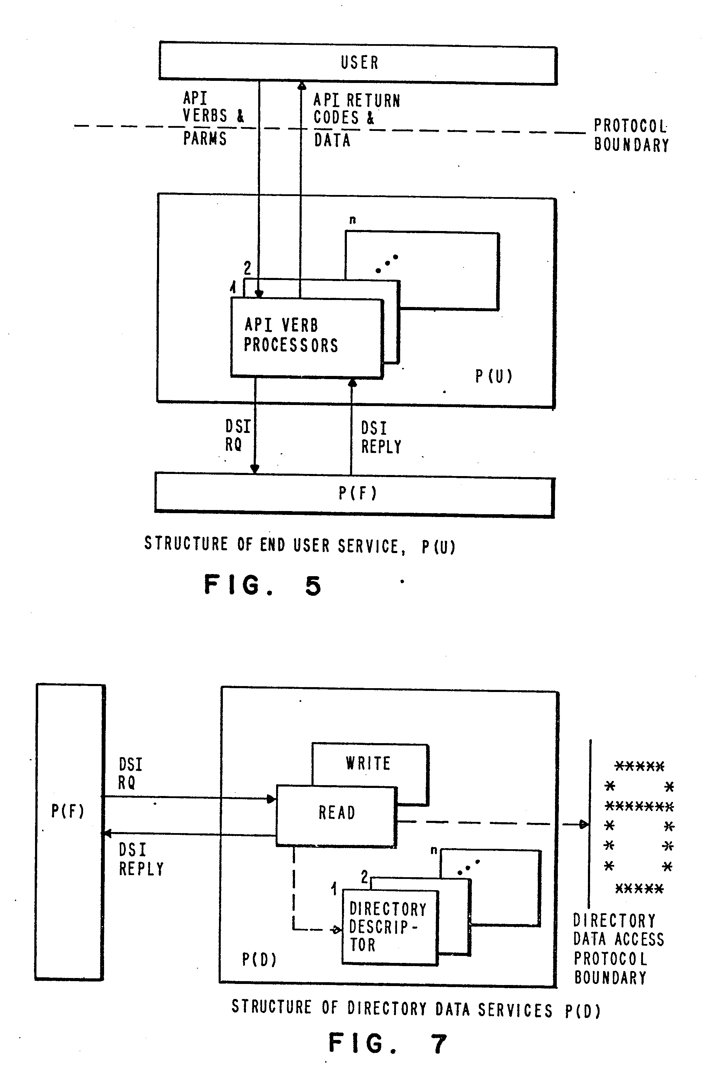

As shown in Fig. 5, P(U) consists of a set of API verb processors, each of which has two components (API send processor and API receive processor). The API send processor is to parse the API verbs and its associated parameters from the user and construct the DSI request encoding to be sent to P(F) for specific directory tasks as requested in the API verbs. The API receive processor is to decode the received DSI replies and present the information/data (carried in the reply) to the user protocol boundary according to the defined API rules.

Directory Function Service: P(F)

The P(F) performs the essence of distributed directory functions such as search/update algorithms and naming algorithm. P(F) is knowledgeable of the existence of distributed directories and name database (if any), and it provides a focal point for maintaining currency among them in the system.

The P(F) is responsible for providing the information response satisfying the request from P-(U). P(F) maintains/ manages the directory operation control block to be used by the directory algorithm facilities. The control block contains the algorithm control information such as affinity lists. P(F) uses this information to determine the best way to get information and respond to the requests from P(U). P(F) interacts with other remote P(F)s as necessary to locate the target P(F) (that is, the P-(F) directly linked to the P(D) which can access requested directory data). The target P(F) obtains the directory data from the D (P), and sends it to the source P(F) (that is, the P(F) that originally received a request from P(U)). Then the source P-(F) passes the directory data to the P(U) that originated the request. P(F) is the bridge form of service interacting with both P(U) and P(D), as well as P(N).

## Structure of P(F)

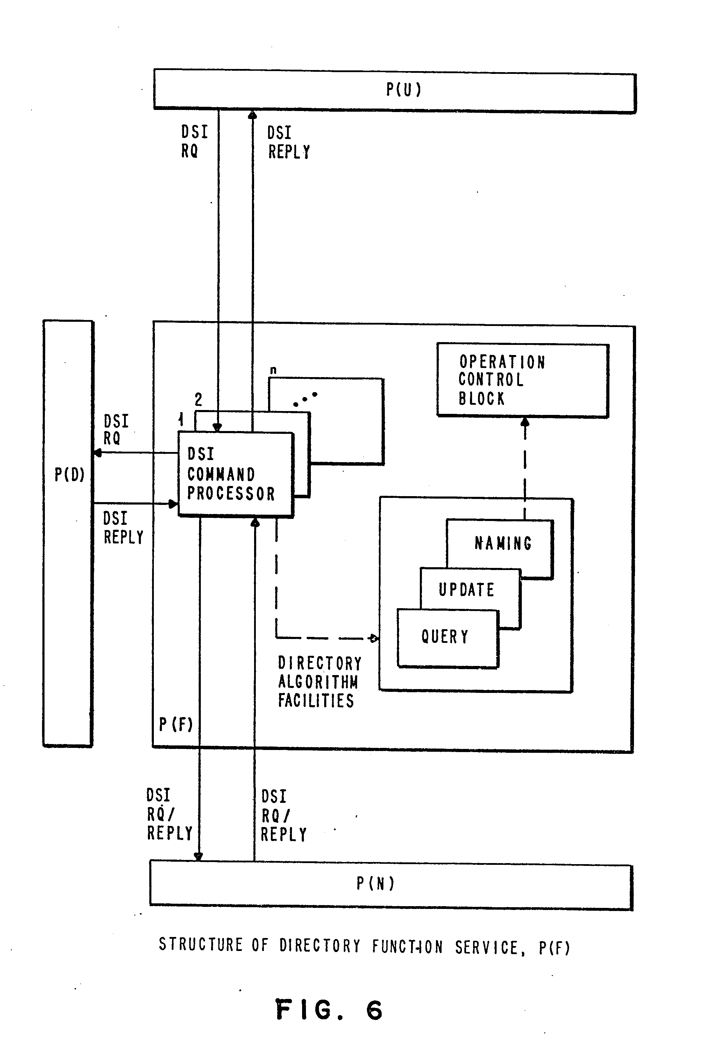

As shown in Fig 6, P(F) consists of a set of DSI command processors, each of which has two components (DSI request processor and DSI reply processor) to process the received requests and replies respectively. The format of the input to the P-(F) should preserve the DSI command construct regardless of whether the command is received from the P(U) or the remote P(F)s through the communication network.

The DSI request processor the DSI processes the DSI requests received from either P(U) or remote DSUs. It uses the directory algorithm facilities such as the query/update propagation alogorithm and the name assignment algorithm as appropriate. The directory algorithms determine the target DSU which can provide the requested information. If the receiving DSU is determined to be the target DSU, the DSI request processor fetches the requested information by way of P(D) and sends the DSI reply carrying that information to the origin DSU. Otherwise, the DSI request processor passes the received request to the other DSU as the algorithm determines, based on the affinity lists of the operation control block.

The DSI reply processor processes the DSI replies which carry the information requested by the DSI requests. If the receiving DSU is the origin DSU (which originated the DSI request), the DSI reply processor passes it to the local P(U). Otherwise, it sends the received DSI reply toward the origin DSU.

## Directory Data Service: P(D)

The P(D) manages the directory data access protocol boundary to access and maintain the directory data. Only P(D) has knowledge of the structure of the directory contents by way of the directory descriptors specified by the users, thus shielding other DSP's from the directory data structures.

The P(D) receives the directory data request - (query, update and so on) from P(F), performs the appropriate operation on the directory data by way of the data access protocol boundary and responds as appropriate to the P(F). It is the responsibility of P(F) to locate the target P(D) (that is, the P(D) maintaining the requested directory data) before sending a request to that P(D).

## Structure of P(D)

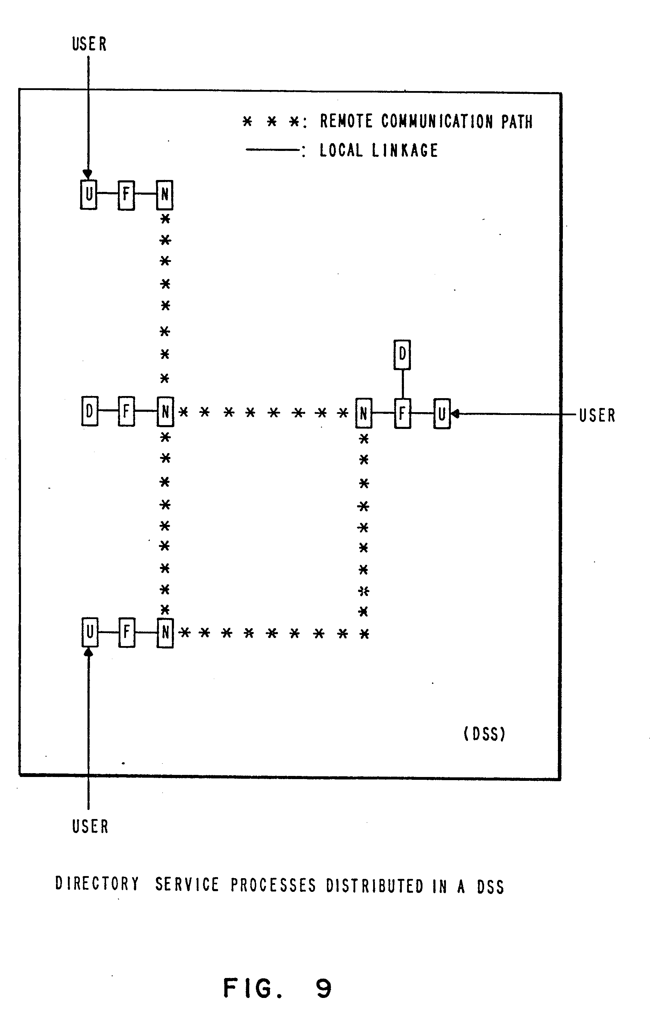

As shown in Fig. 7, the P(D) consists of two processors, Read and Write. The read processor services the DSI requests (for example, query), from P(F), which requires reading the directory data through the data access protocol boundary. It reads the requested directory data according to the directory descriptors and returns the retrieved data by way of the appropriate DSI reply to P(F). The write processor services the DSI requests (for example, update), from P(F), which requires writing the directory data through the data access protocol boundary. It performs the directory data update as requested, according to the directory descriptors, and returns the results, if necessary, via the appropriate DSI reply.

## Directory Network Service: P(N)

The P(N) provides the ability to send and receive the DSI commands between DSUs. It interfaces with the transport mechanism used for DSU-DSU communication, thus shielding other DSP's from the networking function. P(N) controls the network protocol boundaries to achieve the P(F) to P(F) conversation between remote DSUs. The content of DSI request/replies are basically transparent to P(N), and the function of P(N) is merely to deliver the DSI requests/replies to the remote P(F)-

's through the network. Also, the P(N) does not determine where to send queries or updates. This is determined by the propagation algorithm in the P(F).

## Structure of P(N)

As illustrated in Fig. 8, the P(N) consists of two processors, send and receive. The send processor is to control the sending of data in a DSU-DSU communication. The receive processor is to receive data from the DSU-DSU communication. The functions of these processors have direct dependencies on the protocol boundary of the network used for DSU-DSU communication. The directory structure describes the specific functions of P(N) required to use the DSU-DSU transport mechanisms.

## Structure of P(F)

As shown in Fig. 6, P(F) consists of a set of DSI command processors, each of which has two components (DSI) request processor and DSI reply processor) to process the received requests and replies respectively. The format of the input to the P(F) should preserve the DSI command construct regardless of whether the command is received from the P(U) or the remote P(F)s through the communication network.

The DSI request processor processes the DSI requests received from either P(U) or remote DSUs. It uses the directory algorithm and the name assignment algorithm as appropriate. The directory algorithms determine the target DSU which can provide the requested information. If the receiving DSU is determined to be the target DSU, the DSI request processor fetches the requested information by way of P(D) and sends the DSI reply carrying that information to the origin DSU. Otherwise, the DSI request processor passes the received request to the other DSU as the algorithm determines, based on the affinity lists of the operation control block.

The DSI reply processor processes the DSI replies which carry the information requested by the DSI requests. If the receiving DSU is the origin DSU (which originated the DSI request), the DSI reply processor passes it to the local P(U). Otherwise, it sends the received DSI reply toward the origin DSU.

Directory Data Service: P(D)

The P(D) manages the directory data access protocol boundary to access and maintain the directory data. Only P(D) has knowledge of the structure of the directory contents by way of the directory descriptors specified by the users, thus shielding other DSP's from the directory data structures.

The P(D) receives the directory data request - (query, update and so on) from P(F), performs the appropriate communication. The functions of these processors have direct dependencies on the protocol boundary of the network used for DSU-DSU communication. The directory structure describes the specific functions of P(N) required to use the DSU-DSU transport mechanisms.

Relationships Between DSPs

A DSS can be viewed as a collection of an arbitrary number of P(U)s, P(F)s, P(D)s and P(N)s - (Figure 9). A DSU must contain at least a P(F) and a P(N), although the levels of complexity of the functions to be performed vary depending on the roles of the DUS within a DSS. DSI commands are used as the message units to carry information from one DSP to another. There are two types of DSI commands, DSI request dans DSI reply. The DSI request is used to carry the specific request information to the target DSP, and the DSI reply to carry the information/response to the origin DSP.

Based on the definitions of DSPs discussed above, the following relationship can be constructed to depict the message flows among DSPs -P-(U), P(F), P(D) and P(N).

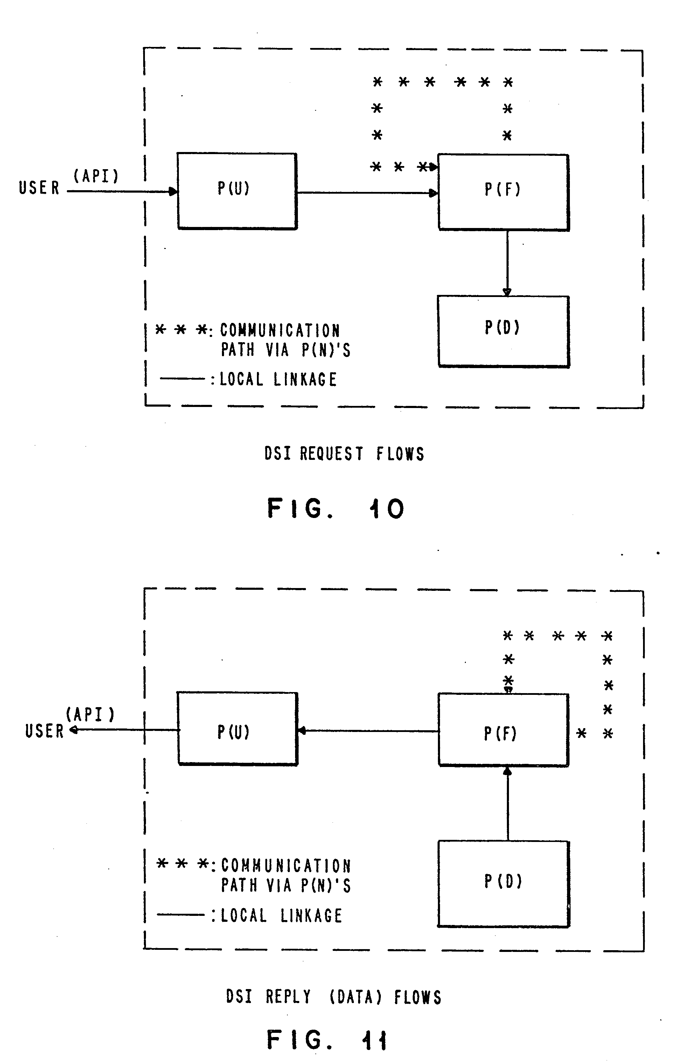

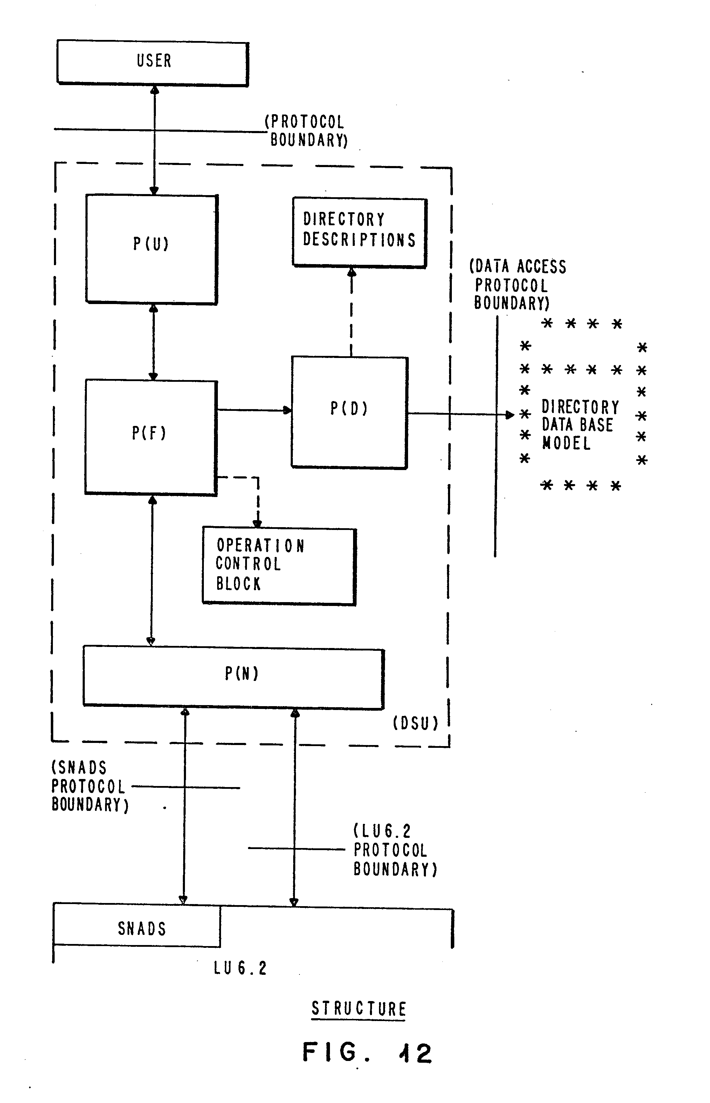

Figure 10 shows the DSI request flows among DSPs. The possible flows are: (1) P(U) -P(F), (2) P-(F) -P(F) by way of P(N)s, and (3) P(F) -P(D). Figure 11 shows the DSI reply flows among DSPs. The possible flows are: (1) P(D) -P(F), (2) P(F) -P-(F), and (3) P(F) -P(U).

Usage of Protocol Boundaries

Thus, the present system definies one protocol boundary for its users and uses three different protocol boundaries to formally describe the system structure. A DSU provides the protocol boundary for the user to send the directory requests to DSU and receive the directory information/response from DSU. DSU uses the protocol boundary of a communication network to communicate with another DSU in another system. Another protocol boundary is used by DSU to control accesses to and read and write the data in a directory data model. The functions of these verbs may be implemented in a product unique manner.

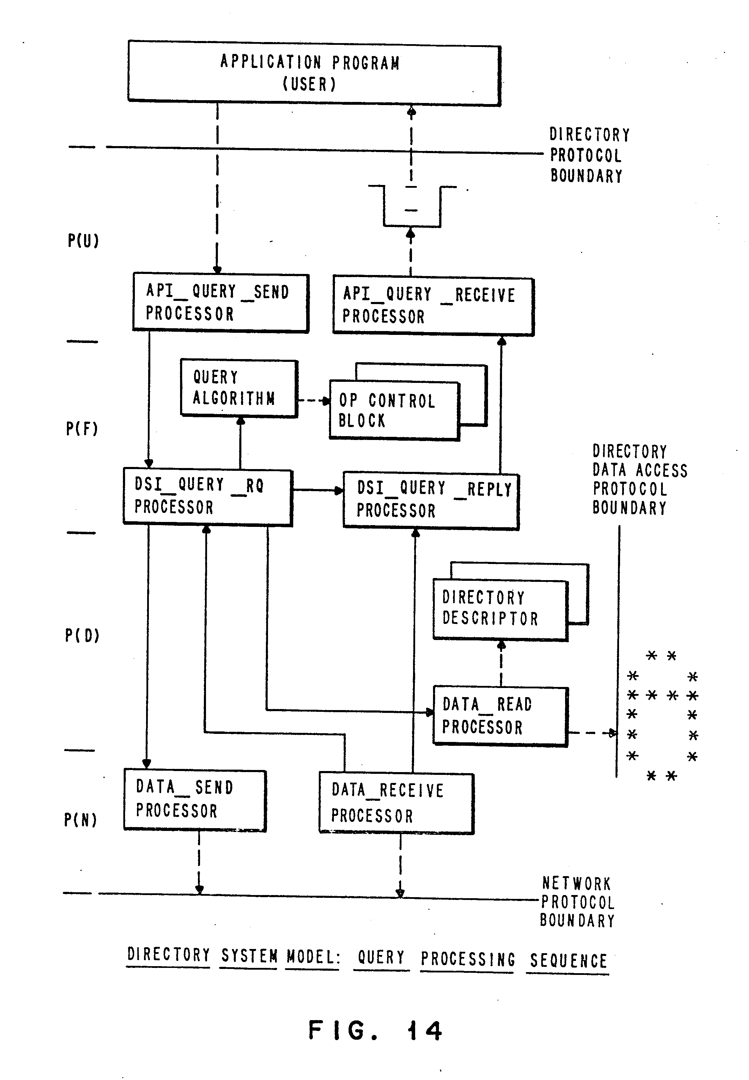

In connection with Figs. 13 and 14 illustrating the processing sequence for update and query propogation, respectively, there are separate processors shown for update reply, update request, query reply and query request. However, if a given DSU is not involved in query propagation, only the update processors are required.

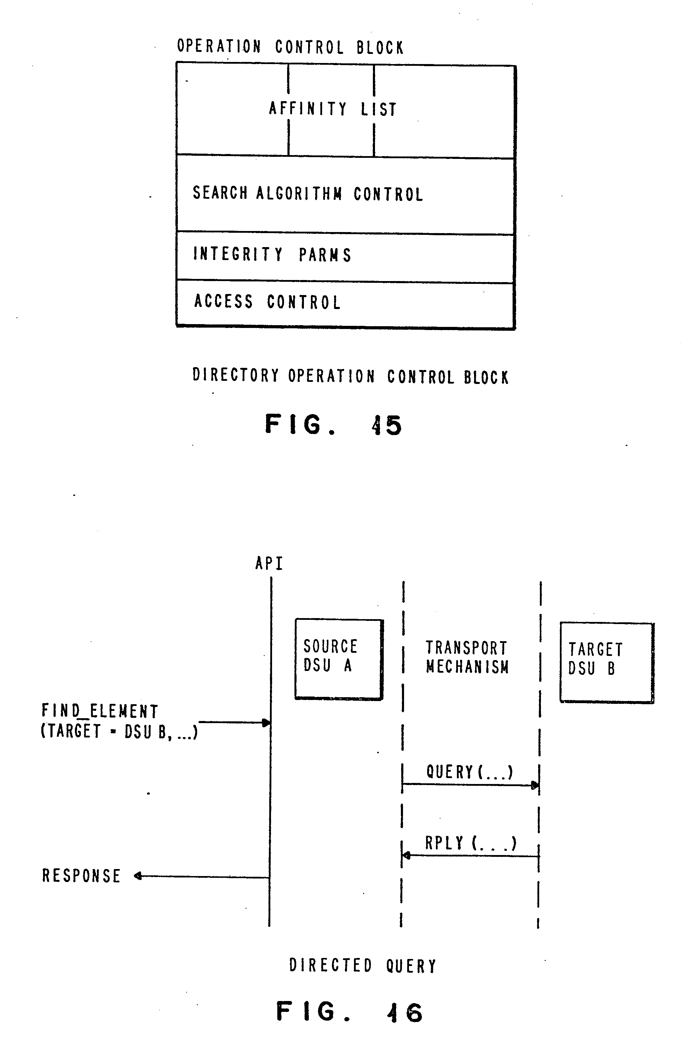

As shown in Fig. 15, the present invention employs a directory operation control block. The operation control block contains informations which controls the directory system functions performed on behalf of the user. This component includes search (query) algorithm control information, and internal tables which define the relationship of this member user directory with other members (at other DSUs) within a particular directory database.

The directory operation control block shown in Fig. 15 supports directory system services such as automatic search and automatic maintenance to the user. This control block is associated with a particular member of the directory database, and the information contained therein is location-dependent. This control block is usually initialized by way of directory system generation parameters, although changes to internal operation of the directory system fo this member may occur dynamically through the protocol boundary.

The directory operation control block contains the affinity list, search algorithm control field, integrity parameters field, and access control field, which can be described as follows.

Affinity List: The affinity list describes the logical relationship between this member and other members of a particular directory database. The affinity list data values describe whether other directory database members are superiors, peers, or subordinates to this member. The manner in which directory data is distributed, and logically configured, can therefore be derived from affinity list data values. A consequence of affinity list design enables a reconfiguration of user data (say, from a centralized to a distributed configuration) by subsequent changes to affinity list data values.

Search Algorithm Control

This field supports various user options of the automatic name resolution function. Such options may include action to be taken by the DSU upon determining a "not found" condition at this member, such as report an "error", continue searching using internal search algorithms, or return a data value to the user.

There may be cases where a cascaded search is possible using participating members' affinitiy tables. Similarly, some members who do not support this capability can terminate the search from continuing beyond this point; this may be useful to support products of varying capabilities in a depth-first search algorithm.

## Integrity Parameters

Degrees of error tolerance, or of consistency of user data within the distributed directory database, are supported by means of the integrity parameters field. These can be described by the user at implementation.

## The User-DSU Interface

The protocol boundary verbs (API) used in the query functions may include the following which are described in rough functional form. The description is meant only to provide sufficient detail to enable the understanding of the query mechanisms that will be described subsequently, and is not in any sense meant to be exhaustive.

The parameters that can be specified for a query request include the following:

Input Search Argument (typically, the name of the object) Directory Type ID

Information Desired

Whether the query is to be local only.

There are two basic ways the query mechanisms can be described; directed and undirected.

## THE DIRECTED QUERY MECHANISM

This is the simplest query mechanism, and in it the user specifies the identity of the DSU to which the query message muste be sent-the target DSU. The DSU to which the user is attached (the source DSU) would then use the transport mechanism to send a message to the target DSU. The target DSU would receive this message, perform the necessary operations on its local directory and respond as appropriate. The target DSU would not propagate the message to any further remote DSU.

Figure 16 depicts an example of the use of a directed query. It wille be noted that the use of a directed query does not imply physical adjacency of source DSU and target DSU. The mechanism can be used where the user knows the target DSU and the underlying transport provides a communication path to the target DSU. The mechanism cannot be used if either of the above conditions are not satisfied. While the second condition may be satisfied in many environments, it is probably unlikely that the user will know the identity of the target DSU. Special cases where the user has this information may include:

1. The user obtains this information through some mechanism defined by the user. An example of this mode of operation is if the name of the object contains the identity of the target DSU.

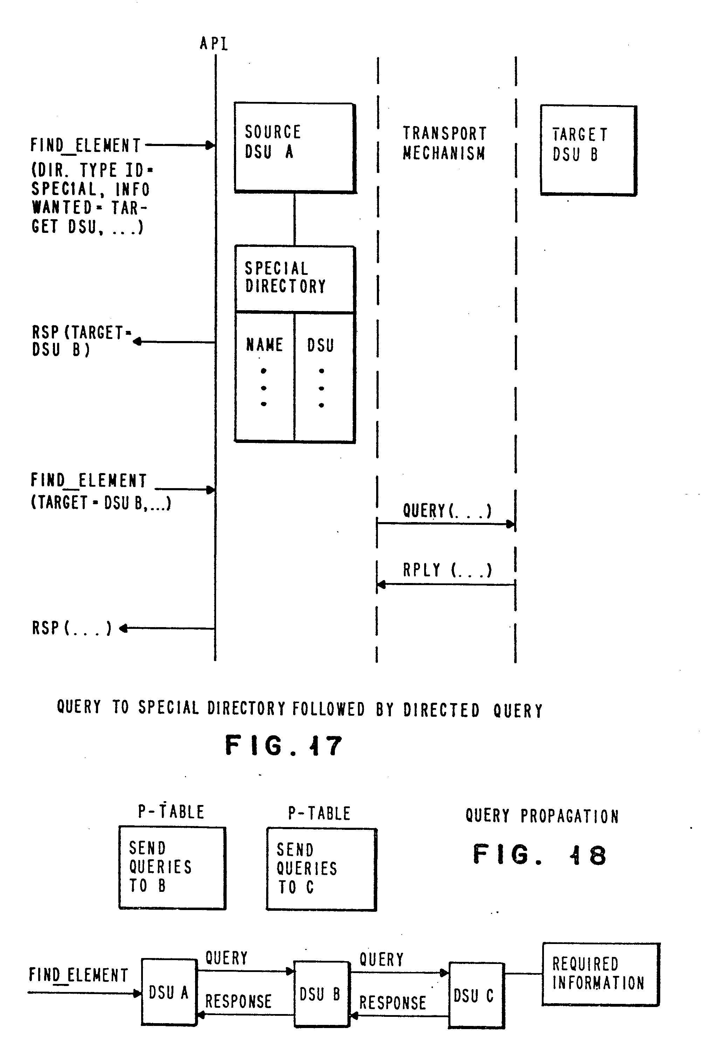

2. A directory service can maintain a special directory which contains the identities of the target DSUs for certain objects in the network. The user would query this special directory, obtain the target DSU information, and then initiate a directed query. This special directory may also be maintained through one of the query/update mechanisms. Figure 17 depicts an example of the use of this special directory.

If either condition described above does not prevail, or if it desired that target DSUs propagate the query further, the directed mechanism cannot be employed.

## THE UNDIRECTED QUERY MECHANISM

In the undirected mechanism, the user does not provide the identity of the target DSU. Instead, the propagation of queries is guided by data structures known as propagation tables or P-tables. Each DSU maintains, for each directory type, a P-table which determines, for that directory type, which other DSUs to send query messages to.

Upon receipt of an undirected query, the source DSU consults its P-table for that directory type and, based on the information contained in the P-tables, sends a query message to one or more DSUs. The DSUs that receive the message consult their own P-table and may propagate the query further. Figure 18 depicts a typical example of this type of query propagation.

The fact that the receiving DSU may propagate the message further creates two possible causes of incorrect operation. Firstly, there is the possibility that the query sent to one DSU, (DSU B in the example shown in Fig. 18), is not propagated while the query sent to another DSU is propagated (DSU C), resulting in the response from one DSU arriving very much before the response from the other. Incorrect operation may result if the source DSU responds to the user and erases any memory of the query immediately after the first response.

Secondly, there is the possibility that query messages may 'loop'. For example in Figure 19, the P-tables are set up so that DSU A sends queries to DSU B, and DSU B send queries to DSU C. If no mechanism was in place to prevent looping, queries could bounce back and forth between the two DSUs forever.

The mechanism that will be described in the following sections solves the above problems by creating a special control block for each query and maintaining that control block until propagation has terminated. Further details are discussed below under "The Basic Query Propagation Mechanism".

## P-Tables

The P-tables at the various DSUs define how the DSUs interact with one another in performing queries. Each DSU in the network contains P-tables for every directory type for which it may perform undirected queries. The P-table in a DSU contains the identities of some of the other DSUs in the network. It must be possible to establish a communication path with any DSU that appears in a P-table.

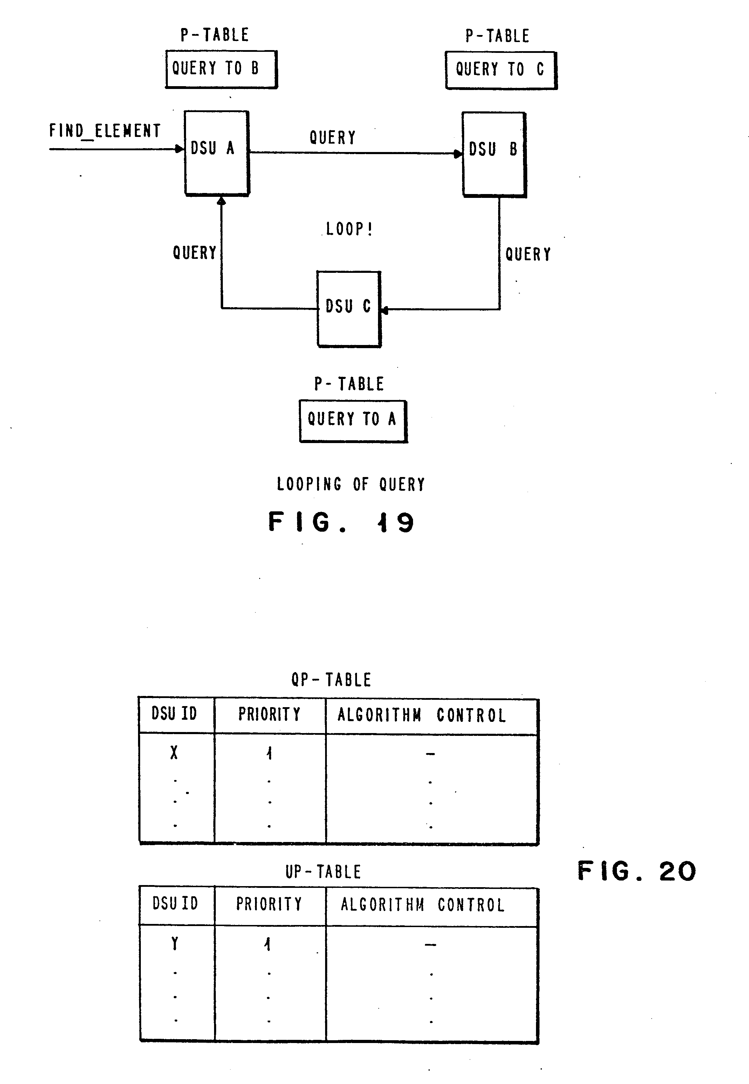

The P-table consists of two parts, a query P-table (QP-table) and an update P-table (UP-table). Additional description of the function and use of the update P-tables is contained in the above-referenced copending application (A3). Additional description of the directory control block and the query control ·block used in query propagation is contained in the above-referenced copending application (A2). The QP-table defines the DSUs to which queries are sent. The structure of the tables is shown in Figure 20. In addition to containing the identities of the DSUs these tables define the order in which the DSUs are queried, by specifying a numeric parameter or priority associated with each DSU. The DSU with the highest priority is sent the query message first, while DSUs with equal priority receive the messages in parallel. As Figure 20 also depicts, there is an extra algorithm control field associated with each DSU entry.

The following describes the processing of queries and updates, with or without propagation. The different cases involved in such processing include:

Query Processing at the origin DSU without propagation -the origin DSU receiving the query request from the user satisfies the request from the locally residing directory without propagation.

Query Processing at the origin DSU with propagation. The origin DSU cannot locally satisfy the request from the user and, therefore, originates the query request for propagation to other remote DSUs.

Query Processing at the intermediate DSU - The intermediate DSU receiving a query request from the remote DSU cannot satisfy the request and, therefore, propagates the query request further to other DSUs.

Query Processing at the target DSU -The target DSU receiving a query request retrieves the requested data and send the query reply toward the origin DSU.

Update Processing at the origin DSU -The origin DSU receiving an update request from the user originates the update request for the propagation to the DSUs to be affected.

Update Processing at the intermediate DSU - The intermediate DSU receiving an update request from the remote DSU propagates the update request further to other DSUs to be affected.

Each case will be described separately by considering only those components of the directory system structure that are required to process the given case. In the drawings, solid lines with arrows denote procedure CALLS. Dotted lines with arrows denote the execution of the protocol boundaries or the access of the control data block. Figure 14 illustrates the directory system model for the query processing, while Figure 13 illustrates the directory system model for update processing.

## QUERY PROCESSING CASES

Query Processing at Origin DSU (No propagation)

The processing steps include:

1. The application program calls the API__ Query Send Processor to pass the QUERY verb.

2. The API__ Query__ Send validates its syntax and parameters. The API__ Query__ Send calls the DSI_Query_RQ processor to pass the Query request for processing.

3. The DSI__ Query__ RQ processor calls the Data__Read processor to request the data. The Data__Read processor retrieves the requested directory data by managing the data access protocol boundary according to the directory descriptors, and returns the retrieved data to the DSI__Query__RQ.

4. The DSI__Query__RQ constructs the DSI query reply which carries the retrieved data, and calls the DSI__Query__Reply processor to pass the query reply.

5. The DSI__Query__Reply processor manages the finite state machines associated with the query request, and calls the API__Query__Reply processor to present the results of the query to the application program.

6. The API_Query_Reply Processor decodes the DSI query reply and places the resulting data into the queue.

Control is eventually returned to the API_Query_Send. At this time, the API_Query_Send returns control with the return code ("successful") to the application program.

Query Processing at the origin DSU (Propagation)

The processing for the case where the origin DSU cannot satisfy the query request from the local directory, thus originating the DSI query request for propagation to other remote DSUs, is as follows:

1. The application program calls the API_Query_Send Processor to pass the QUERY verb.

2. The API_Query_Send validates its syntax and paramemeters ters. The API_Query_Send calls the DSI_Query_RQ processor to pass the Query request for processing.

3. The DSI_Query_RQ processor calls the Data_Read processor to request the data. The Data_Read processor returns an indication that it cannot find the requested data from the local directory.

4. The DSI_Query_RQ calls the Query Algorithm which is one of the Directory alogorithm facilities. The query algorithm determines which DSU to send the DSI query request to for remote search.

5. The DSI_Query_RQ places the destination DSU name (which indicates the next DSU for the request to be delivered to) in the appropriate field of the DSI query request, and calls the Data_Send processor to send the DSI query request through the network.

6. The Data_Send processor manages the network protocol boundary for proper delivery of the DSI query request to the destination DSU. At this time control will be returned to the API_Query_Send through the DSI_Query_RQ, and API_Query_Send returns control with the return code ("successful") to the application program.

7. The Data_Receive processor receives the DSI query reply carrying the requested data from the remote DSU through the network protocol boundary.

8. The Data_Receive processor calls the DSI_Query_Reply processor to pass the DSI query reply received from the remote DSU.

9. The DSI_Query_Reply processor manages the finite state machines associated with the query request, and calls the API_Query_Reply processor to present the results of the query to the application program. Optionally, the results of the query can be retained in the local directory by calling the Data_Write processor.

10. The API_Query_Reply Processor decodes the DSI query reply and places the results of the query into the queue. Optionally, application program is scheduled for each enqueued query result.

Query Processing at an Intermediate DSU

The processing for the case where the intermediate DSU receives a DSI query request but it cannot service the query request from the local directory, thus sending the DSI query request for propagation to other remote DSUs, is as follows:

Processing steps:

1. The Data_Receive processor receives the DSI query request from the remote DSU through the network protocol boundary.

2. The Data_Receive processor calls the DSI Query RQ processor to pass the DSI query request received from the remote DSU.

3. The DSI_Query_RQ processor calls the Data_Read processor to request for the data. The Data_Read processor returns an indication that it cannot find the requested data from the local directory.

4. The DSI_Query_RQ calls the Query Algorithm to determine which is the next DSU for query propagation.

5. The DSI_Query_RQ places the destination DSU name in the appropriate field of the DSI query request, and calls the Data_Send processor to send the DSI query request through the network.

6. The Data_Send processor manages the network protocol boundary for proper delivery of the DSI query request to the destination DSU.

Query Processing at Target DSU

The processing for the case where the target DSU receives a DSI query request from a remote DSU, retrieves the requested data from the local directory and sends the DSI query reply toward the origin DSU is as follows:

Processing steps:

1. The Data_Receive processor receives the DSI query request from the remote DSU through the network protocol boundary.

2. The Data_Receive processor calls the DSI_Query_RQ processor to pass the DSI query request received from remote DSU.

3. The DSI_Query_RQ processor calls the Data_Read processor to request for the data. The Data_Read processor retrieves the requested directory data by managing the data access protocol boundary according to the directory descriptors, and returns the retrieved data to the DSI__Query__RQ.

4. The DSI__Query__RQ constructs the DSI query reply which carries the retrieved data, and calls the Data__Send processor to send the DSI query request through the network.

5. The Data__Send processor manages the network protocol boundary for proper delivery of the DSI query request to the destination DSU.

## Creation of P-Tables

The entries in each P-table may be created in several different ways. They may be linked directly to the way in which data is distributed through the system, something which may be specified in the form of an affinity table.

Alternatively, the P-tables may be defined directly at system generation time and remain unchanged through the entire directory operation tion, or may be updated dynamically. They may also be created during operation or through other mechanisms such as queries to a 'directory of directories' or through input from the network routing function.

## Access of P-Tables

Furthermore, the protocol boundary may permit only indirect access to the P-tables. The indirection is in that the user does not specify the actual entries in the P-tables, but, instead, specifies the way in which he wants data distributed through the network using certain data distribution primitives. These notions are then translated automatically into entries in P-tables.

The advantage of this indirect approach is that it enables the user to think of the directory structure only in terms of data distribution, something that is intuitive and easy to understand, while shielding him from the complexities of understanting the flow of queries. The disadvantage of this approach is that it limits flexibility and prevents the user from exercising the full range of query propagation options that is possible if direct access to the P-tables is permitted.

## DATA DISTRIBUTION PRIMITIVES

The user may define some data distribution relationships between the DSUs in the network. This section describes the relationships, how they are used to set up a directory service system, and how these relationships then get translated into P-table entries.

In understanting the motiviation behind the translation, it is important to understand the "duality" between queries. In particular, if DSU A always sends an update to DSU B whenever it changes its directory, there is no necessity for DSU B to ever query DSU A. Conversely, if DSU B always queries DSU A, there is no necessity for DSU A ever to send updates to DSU B. The translation from data distribution to P-table entries is designed to take this "duality" into account and thus to conserve on the use of communication bandwidth.

The relationships are with respect to a specific directory type ID. It is possible and indeed likely that the relationship for different directory type ID's will be quite different. The following data distribution relationships can be defined:

## Sup-Sub Relationship

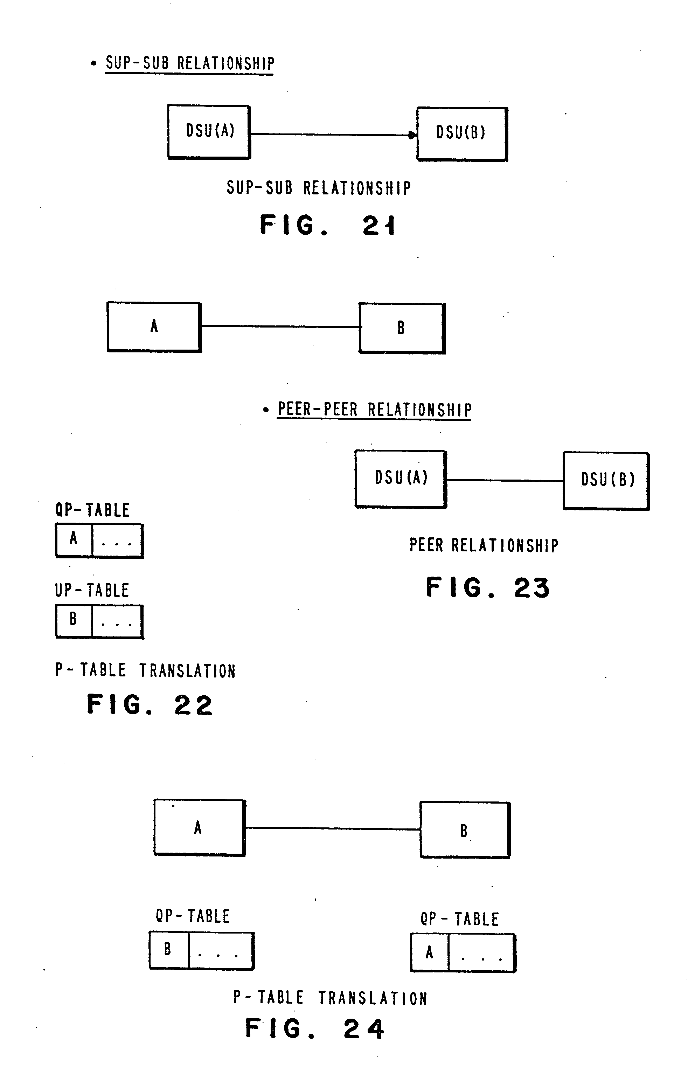

The superior (SUP)-subordinate (SUB) relationship is depicted pictorially in Fig. 21 by a directed arc from A to B. A is the SUB and B is the SUP. The relationship is established by specifying at A that B is a SUP of A and by specifying at B that A is a SUB of B. This relationship implies that under "normal" conditions a communication path exists from the SUB to the SUP through the transport mechanism. In terms of data distribution, it implies that if X is the directory type ID for which this relationship has been defined, then B's directory of type ID X is a superset of A's directory of the same type ID.

The translation into P-table entries attempts to preserve the nature of the relationship. As B is the SUP of A, both queries are propagated from A to B. However, as B's directory contains all the information that A's directory contains, B neither queries nor updates A. The translation to P-table entries in A and B is depicted in Figure 22.

## Peer-Peer Relationship

As shown in Fig. 23, this relationship is depicted pictorially by an undirected arc between the PEERs. The relationship is established by specifying at A that B is a PEER of A and by specifying at B that A is a PEER of B. This relationship implies that the PEERs can communicate with each other through the transport mechanism and that the user would like them to communicate directly in order to perform directory functions. It does not imply any relationship in terms of data distribution. Thus, in the translation to P-table entries, queries are exchanged between PEERs, as represented in Fig. 24.

Replicated Relationship

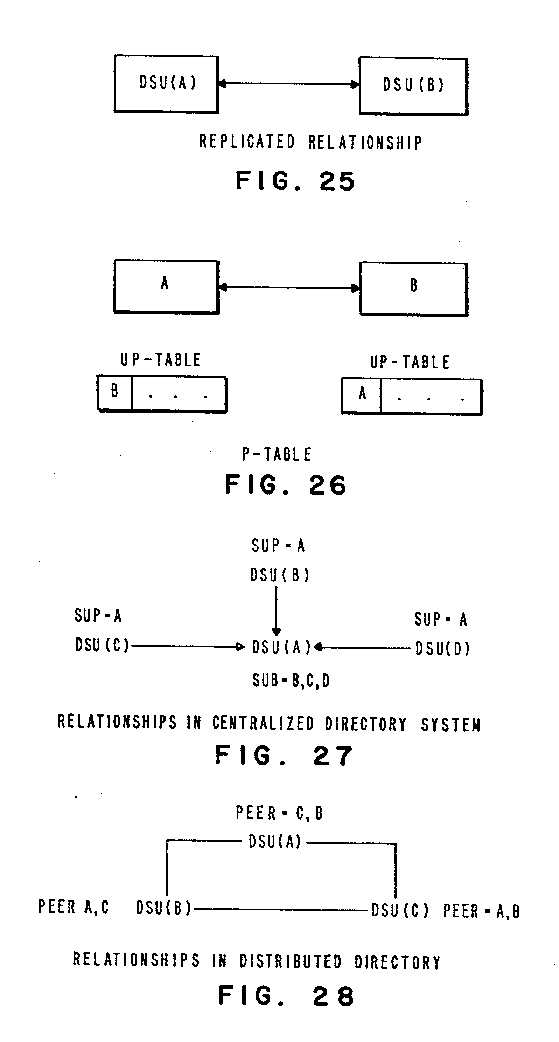

This relationship is depicted pictorially in Fig. 25 by a bidirectional arc between the DSUs. The relationship is set-up by specifying at A that B is a REPLICATE of A and by specifying at B that A is a REPLICATE of B. This relationship implies that the DSUs can communicate with each other through the transport mechanism. In terms of data distribution, it is equivalent to two SUP-SUB relationships; that is, B is a superset of A and A is a superset of B. Clearly, this can be satisfied only if A and B are identical. The translation to P-table entries is designed to preserve the replication by propagation updates between the DSUs as represented in Fig 26. It will be apparent that many other types of relationships are possible.

Other Relationships

The examples shown in Figs. 27-30 illustrate that the definition of relationships between the DSUs in a network determines the data distribution. It will be noted that the relationships define a network over which queries are normally propagated. This network is usually a sub-network of the network formed by defining all possible communication paths. In other words, there may be communication paths available between DSUs which are not normally used in query propagation.

PRIORITIES OF THE ENTRIES

It has been shown how the data distribution primitives defined get mapped into entries in the QP-table and the UP-table. It needs to be shown how the priority of these entries is established. Consider the UP-table. Clearly, it is advantageous to propagate in parallel to all SUP DSUs, as this would enable the update to reach the appropriate destinations as soon as possible. Thus, in the translation to P-table entries, all entries are given equal weight as shown as an example in Fig. 31.

Considering the QP-table, both SUPs and PEERs are entered into the table. In propagating queries, it is not the case that parallel propagation is always desirable. In some instances, sequential propagation may be preferable as it may result in less bandwith being used in query propagation. Thus, two basic methods, the parallel and the sequential, are provided for in constructing P-tables. The choice of parallel or sequential can be controlled at the time of system definition.

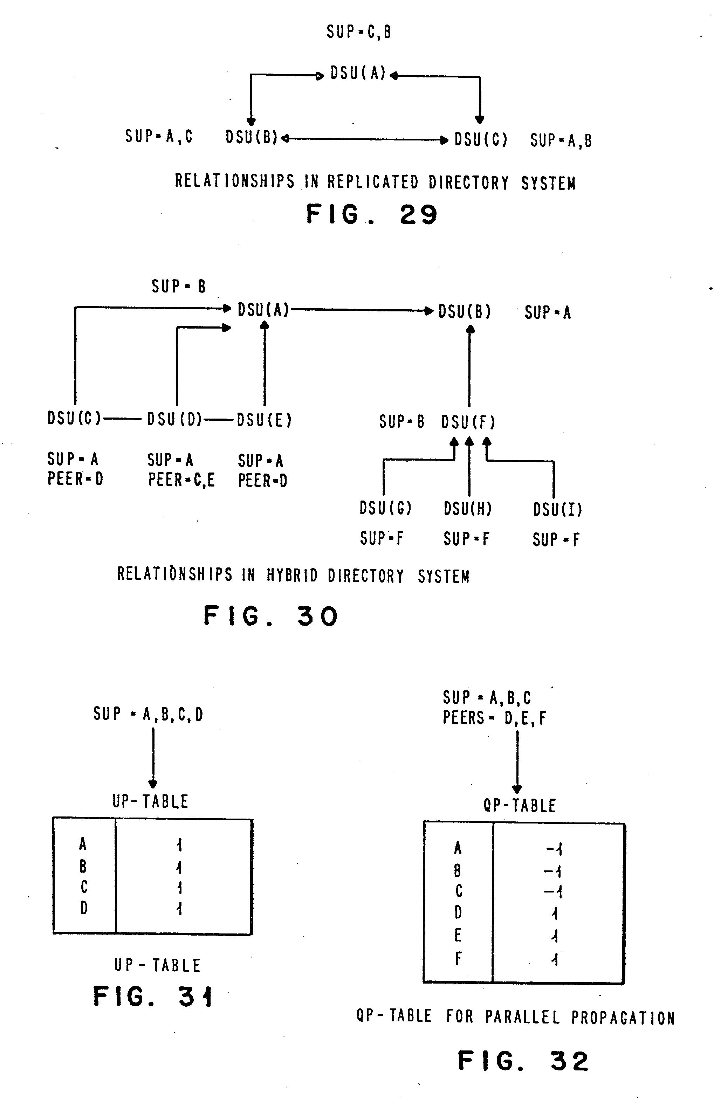

The parallel approach is very similar to that used in the construction of the UP-tables. All SUP entries are given equal priority and all PEER entries are given equal priority. The priority of the SUPs, however, is higher than the priority of the PEERs (that is, a smaller numerical value). For reasons that will become apparent when the algorithms are described, the SUPs are assigned a negative number as priority. Fig. 32 shows an example of this.

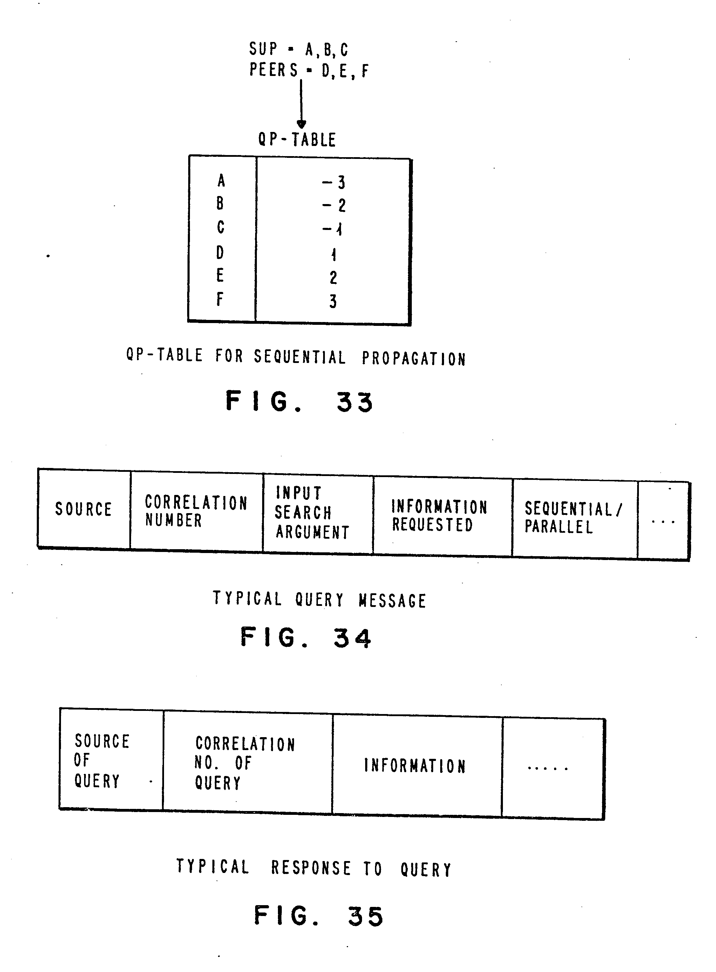

This sequential propagation approach assigns priority number to the DSUs in ascending order, with the SUPs having the smaller numbers, (again chosen to be negative), and the PEER's the larger number (positive). Fig. 33 depicts this through an example.

The determination of whether parallel or sequential propagation is used is usually made at create-configuration time or automatically by means of a predefined user algorithm. It is important that all the DSUs that participate in a given query use the same mode of propagation. Thus, it is not permitted for the originating node to propagate a query in a sequential fashion and for intermediary nodes to relay that query in parallel fashion. In order to ensure this, the query messages that are propagated in the network contain a bit which indicates whether the DSU that initiated the query used sequential or parallel propagation.

Intermediary nodes use the method of propagation indicated in the query message, thereby ignoring the priorities in the QP-table, and creating a new set of priorities if the query message specifies a different mode of propagation than the mode for which their QP-tables are set up.

RELATIONSHIP RULES

The relationships of the DSUs in the network for a given directory type ID should satisfy certain rules. These rules are important in order to maintain internal consistency of the P-table in a given DSU, as well as in the relationship between P-tables in different DSUs. The rules are as follows:

2. There exists a DSU C so that there are paths consisting entirely of directed arcs, traversed in the indicated direction, from both A and B to C. Note that a degenerate case where this condition would be satisfied would be if there was a directed path from A to B or vice versa.

In order for the propagation algorithms not to use an unecessarily large amount of bandwidth, only one of 1 and 2 above must hold.

If B is PEER(A), then D cannot be SUP(A) or REPLICATE(A). Similary, if B is SUP(A), then B cannot be PEER(A) or REPLICATE(A); and

PEER relationships are always reciprocal. Similarly, if B is SUP(A) then B cannot be PEER(A) or REPLICATE(A) and if B = REPLICATE (A) then it cannot be PEER(B) or SUP(A).

## THE BASIC QUERY PROPAGATION MECHANISM

This is shown in block diagram form in Fig. 14. The query message sent between the DSUs contains all the information that initiated the query, and in addition, the identification of the DSU that originated the propagation of the query (the source DSU), and a correlation number which is generated by the source DSU. Fig. 34 shows a typical query message. Any response message contains the information generated in response to the query and, importantly, also includes the identification of the DSU that was the source of the query and the correlation number contained in the query. Fig. 35 shows a typical query response message.

The combination of source DSU identification and correlation number is used by the various DSUs in the network to uniquely identify that query and to correlate responses to the query with the query itself. The DSU identities are required to be unique. In order for the combined DSU identity plus correlation number to be unique, it is necessary for the source DSU to ensure that it uses a correlation number only if it is certain that no instance of any previous query message that it may have generated with the same correlation number remains in the network.

A practical method of achieving this is to use as a correlation number a time-stamp or a constantly incremented sequence number, taking care to ensure that the size of the correlation number field and therefore, the time between wrapping of the number, is large. The propagation of query messages is guided by the P-tables for that directory type at each DSU.

## SUMMARY

It has beeen successfully demonstrated that queries can be propagated across any network environment or topology. Either theses queries can be directed to a target or undirected (automatic) by means of the use of P-tables.

P-tables define relationships (SUP-SUB, PEER-PEER, etc.) between directory units (DSUs), whether they are local or remote. Based on priority and the type of propagation desired (sequential or parallel), queries are sent to participating DSUs. In addition, the mechanisms also provide for the user to specify his own algorithms to either propagate queries or determine the mode. The mechanisms thus described provide for both uni-and bi-directional query propagation. Inherent in these mechanisms is the performance criteria to reduce looping and audit trails for recovery.

## Claims

1. In a directory database system including a network having a plurality of communication paths and a plurality of directory service units (DSU), each of said DSUs providing one or more directory service functions within said directory database, an apparatus for propagating a user query relative to an object from a source DSU to a target DSU comprising :

a special directory containing the identities of target DSU's for certain of said objects in said network,

means for communicating said user query from said source DSU to said special directory means for generating information identifying the target DSU for said object embodied in said query, and

means for communicating said information relative to said identified target DSU to said source DSU.

2. In a directory database system including a network having a plurality of communication paths and a plurality of directory service units (DSU), each of said DSUs providing one or more directory service functions within said directory database, an apparatus for propagation of an undirected user query relative to an object from a source DSU to one or more target DSUs, which target DSU may contain information relative to said object, comprising :

- a propagation (P) table in each of said DSUs, each of said P tables being a data structure capable of determining which other DSU's to send said user query to,

-means in said source DSU for examining its associated P table for the directory type specified in said query to generate an identification of one or more additional target ones of said DSUs to which said query should be directed,

-means for propagating a query from said source DSU to those additional DSU's identified by said P table in said source DSU, and

-means for returning to said source DSU information responsive to said user query from the one of said additional target DSU's containing said information.

3. Apparatus in accordance with Claim 2 including means in each of said additional DSU's for examining its P table to determine the identity of the target DSU to which said query should be directed.

4. Apparatus in accordance with Claim 2 in which each of said P tables includes a query P-table (QP-table) and an update P-table (UP-table).

5. Apparatus in accordance with Claim 4 in which said QP table defines the one or more target DSUs to which a query should be sent.

6. Apparatus in accordance with Claim 5 in which each of said QP tables contain information determining the order in which any additional target DSUs are to be queried.

7. Apparatus in accordance with Claim 4 in which each of said QP tables in each particular one of said DSUs defines the status relationship of said particular DSU to other DSUs of the same directory type.

8. Apparatus in accordance with Claim 7 in which the QP table in said particular DSU defines a superior-subordinate relationship between said particular DSU and one or more of said other DSUs.

9. Apparatus in accordance with Claim 7 in which the QP table in said particular DSU defines a peer-peer relationship between said particular DSU and one or more of said other DSUs.

10. Apparatus in accordance with Claim 7 in which the QP table in said particular DSU defines a replicated relationship between said particular DSU and one or more of said other DSU's.

11. Apparatus in accordance with Claim 5 in which each of said QP tables determines whether further propagation of a query to a plurality of other DSU's is to be in a serial or a parallel mode.

12. Directory service system having a plurality of interconnectable directory service units (DSU), characterized in that it comprises a plurality of processes within said directory service system, said plurality of processes including:

-a P(U) process for interfacing with a user of said system at a user protocol boundary;

-a P(D) process for interacting with a directory database at a directory data access protocol boundary;

-a P(N) process for interacting with a communication network at a network control boundary; and

-a P(F) process for interacting with at least one of the other of said processes in said directory service system.

13. Directory service system in accordance with Claim 12 in which each of said processes is located in one of said DSUs.

14. Directory service system in accordance with Claim 13 in which said directory database with which said P(D) process interacts is accessible by said P(D) process from the one of said DSUs in which said P(D) process is located.

PROCESSES USING THE DIRECTORY SERVICE SYSTEM

FIG. 1

STRUCTURE OF NETWORK SERVICE PROCESS, P(N)

FIG. 8

INTERCONNECTED DSUS IN A DSS

FIG. 2

FUNCTIONS DISTRIBUTED IN A DSS

FIG. 3

TWO-LEVEL HYBRID DIRECTORY SYSTEM

FIG. 4

STRUCTURE OF END USER SERVICE, P(U)

# FIG. 5

STRUCTURE OF DIRECTORY DATA SERVICES P(D)

# FIG. 7

STRUCTURE OF DIRECTORY FUNCTION SERVICE, P(F)

FIG. 6

USER

* * *: REMOTE COMMUNICATION PATH

———: LOCAL LINKAGE

USER

(DSS)

USER

DIRECTORY SERVICE PROCESSES DISTRIBUTED IN A DSS

FIG. 9

DSI REQUEST FLOWS

**F I G. 1 O**

DSI REPLY (DATA) FLOWS

**F I G. 11**

USER

(PROTOCOL
BOUNDARY)

P(U)

DIRECTORY
DESCRIPTIONS

(DATA ACCESS
PROTOCOL
BOUNDARY)

P(F)

P(D)

DIRECTORY
DATA BASE
MODEL

OPERATION
CONTROL
BLOCK

P(N)

(DSU)

(SNADS
PROTOCOL
BOUNDARY)

(LU6.2
PROTOCOL
BOUNDARY)

SNADS

LU6.2

STRUCTURE

FIG. 42

```
┌──────────────────────────────────┐
│     APPLICATION PROGRAM          │
│         (USER)                   │
└──────────────────────────────────┘
```

DIRECTORY
PROTOCOL
BOUNDARY

P(U)

```
┌──────────────────┐      ┌──────────────────┐
│ API_UPDATE_SEND  │      │ API_UPDATE_RECEIVE│
│ PROCESSOR        │      │ PROCESSOR         │
└──────────────────┘      └──────────────────┘
```

```
        ┌──────────────┐    ┌──────────────┐
        │ UPDATE       │    │ OP CONTROL   │
        │ ALGORITHM    │    │ BLOCK        │
        └──────────────┘    └──────────────┘
```

P(F)

DIRECTORY
DATA ACCESS
PROTOCOL
BOUNDARY

```
┌──────────────────┐      ┌──────────────────┐
│ DSI_UPDATE_RQ    │ ───> │ DSI_UPDATE_REPLY │
│ PROCESSOR        │      │ PROCESSOR        │
└──────────────────┘      └──────────────────┘
```

```
                        ┌──────────────┐
                        │ DIRECTORY    │
                        │ DESCRIPTOR   │
                        └──────────────┘
```

P(D)

```
                        ┌──────────────┐
                        │ DATA_WRITE   │
                        │ PROCESSOR    │
                        └──────────────┘
```

```
┌──────────────────┐      ┌──────────────────┐
│ DATA_SEND        │      │ DATA_RECEIVE     │
│ PROCESSOR        │      │ PROCESSOR        │
└──────────────────┘      └──────────────────┘
```

P(N)

NETWORK
PROTOCOL
BOUNDARY

DIRECTORY SYSTEM MODEL: UPDATE PROCESSING SEQUENCE

F I G. 13

APPLICATION PROGRAM
(USER)

DIRECTORY
PROTOCOL
BOUNDARY

P(U)

API_QUERY_SEND
PROCESSOR

API_QUERY_RECEIVE
PROCESSOR

QUERY
ALGORITHM

OP CONTROL
BLOCK

P(F)

DSI_QUERY_RQ
PROCESSOR

DSI_QUERY_REPLY
PROCESSOR

DIRECTORY
DATA ACCESS
PROTOCOL
BOUNDARY

DIRECTORY
DESCRIPTOR

P(D)

DATA_READ
PROCESSOR

DATA_SEND
PROCESSOR

DATA_RECEIVE
PROCESSOR

P(N)

NETWORK
PROTOCOL
BOUNDARY

DIRECTORY SYSTEM MODEL: QUERY PROCESSING SEQUENCE

FIG. 14

OPERATION CONTROL BLOCK

| AFFINITY LIST | | |
|---|---|---|
| SEARCH ALGORITHM CONTROL | | |
| INTEGRITY PARMS | | |
| ACCESS CONTROL | | |

DIRECTORY OPERATION CONTROL BLOCK

# F I G .   45

FIND_ELEMENT
(TARGET - DSU B,...)

RESPONSE

API

SOURCE
DSU A

TRANSPORT
MECHANISM

TARGET
DSU B

QUERY(...)

RPLY (...)

DIRECTED QUERY

# F I G .   46

FIND_ELEMENT
(DIR. TYPE ID=
SPECIAL, INFO
WANTED = TAR-
GET DSU, ...)

RSP (TARGET=
DSU B)

FIND_ELEMENT
(TARGET = DSU B,...)

RSP (...)

API

SOURCE
DSU A

SPECIAL
DIRECTORY

| NAME | DSU |
|------|-----|
| • | • |
| • | • |
| • | • |

TRANSPORT
MECHANISM

TARGET
DSU B

QUERY(...)

RPLY (...)

QUERY TO SPECIAL DIRECTORY FOLLOWED BY DIRECTED QUERY

## FIG.17

P-TABLE

SEND
QUERIES
TO B

P-TABLE

SEND
QUERIES
TO C

QUERY PROPAGATION

## FIG. 18

FIND_ELEMENT

DSU A

QUERY

RESPONSE

DSU B

QUERY

RESPONSE

DSU C

REQUIRED
INFORMATION

P-TABLE

QUERY TO B

P-TABLE

QUERY TO C

FIND_ELEMENT → DSU A — QUERY → DSU B

LOOP!

QUERY                                    QUERY

DSU C

P-TABLE

QUERY TO A

LOOPING OF QUERY

# FIG. 19

QP-TABLE

| DSU ID | PRIORITY | ALGORITHM CONTROL |
|--------|----------|-------------------|
| X | 1 | — |
| . | . | . |
| . | . | . |
| . | . | . |

UP-TABLE

| DSU ID | PRIORITY | ALGORITHM CONTROL |
|--------|----------|-------------------|
| Y | 1 | — |
| . | . | . |
| . | . | . |
| . | . | . |

# FIG. 20

• SUP-SUB RELATIONSHIP

DSU(A) ⟶ DSU(B)

SUP-SUB RELATIONSHIP

# FIG. 21

A —— B

• PEER-PEER RELATIONSHIP

DSU(A) —— DSU(B)

PEER RELATIONSHIP

# FIG. 23

QP-TABLE

| A | . . . |

UP-TABLE

| B | . . . |

P-TABLE TRANSLATION

# FIG. 22

A —— B

QP-TABLE

| B | . . . |

QP-TABLE

| A | . . . |

P-TABLE TRANSLATION

# FIG. 24

REPLICATED RELATIONSHIP

**FIG. 25**

UP-TABLE    UP-TABLE

P-TABLE

**FIG. 26**

SUP = A

DSU(B)

SUP = A                          SUP = A

DSU(C) ──────→ DSU(A) ←────── DSU(D)

SUB = B,C,D

RELATIONSHIPS IN CENTRALIZED DIRECTORY SYSTEM

**FIG. 27**

PEER = C,B

──── DSU(A) ────

PEER A,C   DSU(B) ──────── DSU(C) PEER = A,B

RELATIONSHIPS IN DISTRIBUTED DIRECTORY

**FIG. 28**

SUP = C,B

DSU(A)

SUP = A,C  DSU(B)  DSU(C)  SUP = A,B

RELATIONSHIPS IN REPLICATED DIRECTORY SYSTEM

# FIG. 29

SUP = B

DSU(A)  DSU(B)  SUP = A

DSU(C) —— DSU(D) —— DSU(E)  SUP = B  DSU(F)

SUP = A      SUP = A      SUP = A
PEER = D     PEER = C,E   PEER = D

DSU(G)     DSU(H)     DSU(I)

SUP = F    SUP = F    SUP = F

RELATIONSHIPS IN HYBRID DIRECTORY SYSTEM

# FIG. 30

SUP = A,B,C,D

UP-TABLE

| | |
|---|---|
| A | 1 |
| B | 1 |
| C | 1 |
| D | 1 |

UP-TABLE

# FIG. 31

SUP = A,B,C
PEERS = D,E,F

QP-TABLE

| | |
|---|---|
| A | −1 |
| B | −1 |
| C | −1 |
| D | 1 |
| E | 1 |
| F | 1 |

QP-TABLE FOR PARALLEL PROPAGATION

# FIG. 32

SUP = A,B,C
PEERS = D,E,F

↓

QP-TABLE

| | |
|---|---|
| A | − 3 |
| B | − 2 |
| C | − 1 |
| D | 1 |
| E | 2 |
| F | 3 |

QP-TABLE FOR SEQUENTIAL PROPAGATION

# FIG. 33

| SOURCE | CORRELATION NUMBER | INPUT SEARCH ARGUMENT | INFORMATION REQUESTED | SEQUENTIAL/ PARALLEL | ... |
|---|---|---|---|---|---|

TYPICAL QUERY MESSAGE

# FIG. 34

| SOURCE OF QUERY | CORRELATION NO. OF QUERY | INFORMATION | ..... |
|---|---|---|---|

TYPICAL RESPONSE TO QUERY

# FIG. 35